# EUROPEAN PATENT APPLICATION

(11) **EP 4 280 736 A1**
(43) Date of publication of application: **22.11.2023**
(21) Application number: 21918309.2
(22) Date of filing: 13.01.2021
(51) Int. Cl.: H04W 72/04

(54) **RESOURCE CONFIGURATION METHOD AND APPARATUS, AND RESOURCE DETERMINATION METHOD AND APPARATUS**

(71) Applicant: Beijing Xiaomi Mobile Software Co., Ltd., Beijing 100085 (CN)
(72) Inventor: LI, Xiaolong, Beijing 100085 (CN)
(74) Representative: dompatent von Kreisler Selting Werner - Partnerschaft von Patent- und Rechtsanwälten mbB
(86) International application number: PCT/CN2021/071590
(87) International publication number: WO 2022/151094

(57) **Abstract**

The present disclosure relates to a resource configuration method. The method comprises: configuring a configuration authorization resource for a terminal, wherein the configuration authorization resource is used for the terminal to send positioning measurement information to a network side device. According to the present disclosure, a network side device can configure a configuration authorization resource for a terminal; since the configuration authorization resource is a resource which does not need dynamic authorization, when the terminal is required to send positioning measurement information to the network side device, the terminal can directly send, on the configuration authorization resource, the positioning measurement information to the network side device, without waiting for a base station to configure an uplink resource, such that the delay of a terminal sending positioning measurement information to a core network is reduced, the delay of a positioning process is then reduced, which is beneficial to ensuring the accuracy of positioning, and in addition, the delay of a service obtaining a measurement result is also reduced.

## Description

### TECHNICAL FIELD

The disclosure relates to the field of communication technologies, and in particular, to a method for resource configuration, a method for resource determination, an apparatus for resource configuration, an apparatus for resource determination, an electronic device and a computer readable storage medium.

### BACKGROUND

Various positioning technologies have been introduced in 5G communication, such as uplink positioning technology, downlink positioning technology, and uplink and downlink combined positioning technology.

In downlink positioning technology and uplink and downlink combined positioning technology, the terminal needs to measure the positioning reference signal and send the obtained positioning measurement information to the core network. Specifically, the positioning measurement information can be sent to the base station first, and then sent to the core network by the base station.

In order to send the positioning measurement information to the base station, it is necessary to wait for the base station to configure uplink resources for the terminal, and then send the positioning measurement information to the base station in the configured uplink resources. During this period, waiting for the base station to configure uplink resources requires time, which can cause delays for the terminal to send the positioning measurement information to the core network, leading to delays in the positioning process, which can easily affect the accuracy of positioning and increase the delay for the business to obtain the measurement result.

### SUMMARY

In view of this, embodiments of the present disclosure provide a method for resource configuration, a method for resource determination, an apparatus for resource configuration, an apparatus for resource determination, an electronic device and a computer readable storage medium, to solve technical problems in related technologies.

According to embodiments of a first aspect of the present disclosure, a method for resource configuration is provided. The method is applied to a network side device, and the method includes:

configuring a configured grant resource for a terminal, wherein the configured grant resource is for the terminal to send positioning measurement information to the network side device.

According to embodiments of a second aspect of the present disclosure, a method for resource determination is provided. The method is applied to a terminal, and the method includes:
receiving configuration resource information sent by a network side device; and
determining a configured grant resource for sending positioning measurement information to the network side device, according to the configuration resource information.

According to embodiments of a third aspect of the present disclosure, an apparatus for resource configuration is provided. The apparatus is applied to a network side device, and the apparatus includes:
a resource configuring module, configured to configure a configured grant resource for a terminal, wherein the configured grant resource is for the terminal to send positioning measurement information to the network side device.

According to embodiments of a third aspect of the present disclosure, an apparatus for resource determination is provided. The apparatus is applied to a terminal, and the apparatus includes:
a configuration receiving module, configured to receive configuration resource information sent by a network side device; and
a resource determining module, configured to determine a configured grant resource for sending positioning measurement information to the network side device, according to the configuration resource information.

According to embodiments of a fifth aspect of the present disclosure, an electronic device is provided, including:
a processor; and
a memory configured to store instructions executable by the processor,
wherein the processor is configured to execute the method for resource configuration and/or the method for resource determination described above.

According to embodiments of a sixth aspect of the present disclosure, a computer readable storage medium is provided, having stored thereon a computer program. When the program is executed by a processor, the method for resource configuration and/or the method for resource determination described above is implemented.

According to embodiments of the present disclosure, the network side device can configure the configured grant resource for the terminal. As the configured grant resource belong to resources that do not require dynamic grant, when the terminal needs to send positioning measurement information to the network side device, it can directly send the positioning measurement information to the network side device on the configured grant resource without waiting for the base station to configure uplink resources. This reduces the delay of the terminal sending the positioning measurement information to the core network, thereby reducing the delay of the positioning process, which is conducive to ensuring the accuracy of positioning, and also reduces the delay of the business to obtain the measurement result.

### BRIEF DESCRIPTION OF THE DRAWINGS

In order to provide a clearer explanation of the technical solution in embodiments of the present disclosure, the accompanying drawings required for the description of the embodiments will be briefly introduced below. Obviously, the accompanying drawings in the following description are only some embodiments of the present disclosure. For those skilled in the art, other drawings can be obtained based on these accompanying drawings without any creative labor.
Fig. 1 is a schematic flowchart of a method for resource configuration according to an embodiment of the present disclosure.
Fig. 2 is a schematic flowchart of another method for resource configuration according to an embodiment of the present disclosure.
Fig. 3 is a schematic flowchart of yet another method for resource configuration according to an embodiment of the present disclosure.
Fig. 4 is a schematic flowchart of yet another method for resource configuration according to an embodiment of the present disclosure.
Fig. 5 is a schematic flowchart of yet another method for resource configuration according to an embodiment of the present disclosure.
Fig. 6 is a schematic flowchart of yet another method for resource configuration according to an embodiment of the present disclosure.
Fig. 7 is a schematic flowchart of yet another method for resource configuration according to an embodiment of the present disclosure.
Fig. 8 is a schematic flowchart of yet another method for resource configuration according to an embodiment of the present disclosure.
Fig. 9 is a schematic flowchart of yet another method for resource configuration according to an embodiment of the present disclosure.
Fig. 10 is a schematic flowchart of yet another method for resource configuration according to an embodiment of the present disclosure.
Fig. 11 is a schematic flowchart of yet another method for resource configuration according to an embodiment of the present disclosure.
Fig. 12 is a schematic flowchart of yet another method for resource configuration according to an embodiment of the present disclosure.
Fig. 13 is a schematic flowchart of yet another method for resource configuration according to an embodiment of the present disclosure.
Fig. 14 is a schematic flowchart of yet another method for resource configuration according to an embodiment of the present disclosure.
Fig. 15 is a schematic flowchart of a method for resource determination according to an embodiment of the present disclosure.
Fig. 16 is a schematic flowchart of another method for resource determination according to an embodiment of the present disclosure.
Fig. 17 is a schematic flowchart of yet another method for resource determination according to an embodiment of the present disclosure.
Fig. 18 is a schematic flowchart of yet another method for resource determination according to an embodiment of the present disclosure.
Fig. 19 is a schematic block diagram of an apparatus for resource configuration according to an embodiment of the present disclosure.
Fig. 20 is a schematic block diagram of another apparatus for resource configuration according to an embodiment of the present disclosure.
Fig. 21 is a schematic block diagram of yet another apparatus for resource configuration according to an embodiment of the present disclosure.
Fig. 22 is a schematic block diagram of yet another apparatus for resource configuration according to an embodiment of the present disclosure.
Fig. 23 is a schematic block diagram of yet another apparatus for resource configuration according to an embodiment of the present disclosure.
Fig. 24 is a schematic block diagram of yet another apparatus for resource configuration according to an embodiment of the present disclosure.
Fig. 25 is a schematic block diagram of yet another apparatus for resource configuration according to an embodiment of the present disclosure.
Fig. 26 is a schematic block diagram of an apparatus for resource determination according to an embodiment of the present disclosure.
Fig. 27 is a schematic block diagram of another apparatus for resource determination according to an embodiment of the present disclosure.
Fig. 28 is a schematic block diagram of yet another apparatus for resource determination according to an embodiment of the present disclosure.
Fig. 29 is a schematic block diagram of a device for resource configuration according to an embodiment of the present disclosure.
Fig. 30 is a schematic block diagram of a device for resource determination according to an embodiment of the present disclosure.

### DETAILED DESCRIPTION

The following will provide a clear and complete description of the technical solution in embodiments of the present disclosure in conjunction with the accompanying drawings. It is evident that the described embodiments are only a part of embodiments of the present disclosure, not all of them. Based on the embodiments in this disclosure, all other embodiments obtained by ordinary technical personnel in the art without creative labor fall within the scope of protection in this disclosure.

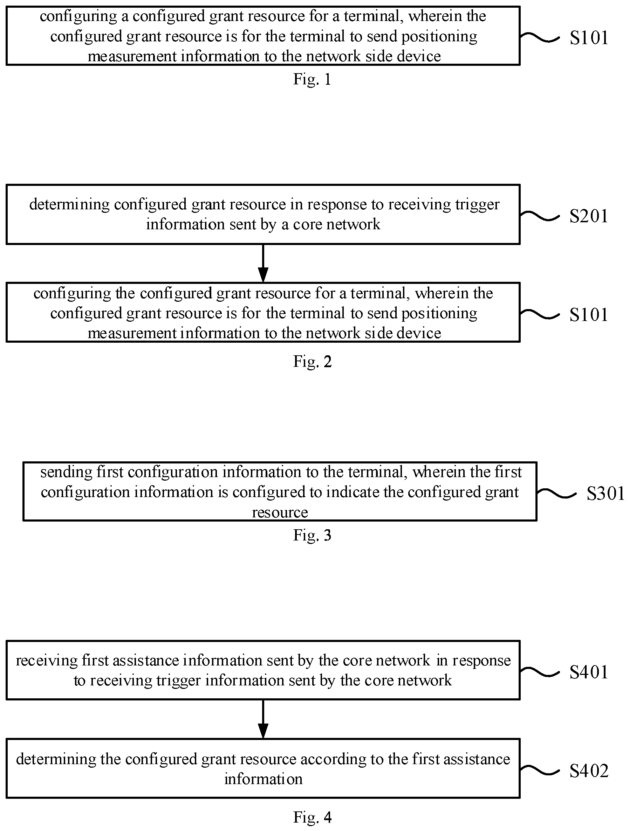

Fig. 1 is a schematic flowchart of a method for resource configuration according to an embodiment of the present disclosure. The method for resource configuration shown in this embodiment may be applied to a network side device, which can communicate with a terminal as a user equipment. The terminal includes but not limited to an electronic device such as a mobile phone, a tablet, a wearable device, a sensor, and an IoT device.

In one embodiment, the network side device may be a base station device, which includes but is not limited to a 4G base station, a 5G base station, and a 6G base station.

In one embodiment, the network side device may be a core network device, for example, it may refer to an LMF (Location Management Function) in the core network.

In one embodiment, the terminal may be the terminal to which the method for resource determination described in any subsequent embodiment is applicable.

As shown in Fig. 1, the method for resource configuration may include following steps.

In step S101, a configured grant resource is configured for a terminal, in which the configured grant resource is for the terminal to send positioning measurement information to the network side device.

In one embodiment, the network side device can configure the configured grant resource for the terminal. As the configured grant resource belong to resources that do not require dynamic grant, when the terminal needs to send positioning measurement information to the network side device, it can directly send the positioning measurement information to the network side device on the configured grant resource without waiting for the base station to configure uplink resources. This reduces the delay of the terminal sending the positioning measurement information to the core network, thereby reducing the delay of the positioning process, which is conducive to ensuring the accuracy of positioning, and also reduces the delay of the business (the business to which the measurement result needs to be applied)to obtain the measurement result.

In one embodiment, the positioning measurement information may be process information of the positioning measurement, such as the measurement result of the positioning reference signal (PRS) measured by the terminal, such as PRS-RSRP (reference signal receiving power) and PRS-RSTD (reference signal time difference). The terminal can send the process information of the positioning measurement to the network side device, and the result information of the positioning measurement is calculated by the network side device based on the process information of the positioning measurement.

In one embodiment, the positioning measurement information may be the result information of the positioning measurement. The terminal can determine the process information of the positioning measurement, calculate the result information of the positioning measurement based on the process information of the positioning measurement, and then send the result information of the positioning measurement to the network side device. For example, the positioning measurement information may be the position information of the terminal calculated by the terminal.

In one embodiment, for example, the terminal can measure the positioning reference signals sent by multiple transmission and reception points (TRPs). The process information of the positioning measurement includes but is not limited to signal strength information measured for the positioning reference signal sent by each TPR, and time information of receiving the reference signal sent by each TRP.

It should be noted that before sending the positioning measurement information to the network side device, the terminal may also receive capability request information (LPP Request Capabilities) sent by the core network, which is used to request the terminal's positioning capability; and send capability information (LPP Provide Capabilities) to the core network to inform the core network of the positioning capability of the terminal. The core network may also provide positioning assistance information (LPP Provide assistance information) for the terminal. The core network may also send positioning request information (LPP Request Location Information) to the terminal. Then, the terminal measures the positioning reference signal to obtain the positioning measurement information. LPP refers to the LTE location protocol.

Fig. 2 is a schematic flowchart of another method for resource configuration according to an embodiment of the present disclosure. As shown in Fig. 2, the network side device is a base station, and the method further includes followings.

In step S201, in response to receiving trigger information sent by a core network, the configured grant resource is determined.

In one embodiment, in the case where the network side device is the base station, the action of the base station to determine the configured grant resource may be triggered by the core network. For example, the configured grant resource is determined when receiving the trigger information sent by the core network.

In one embodiment, the timing at which the core network sends the trigger information to the base station may be determined by the core network as needed. For example, when the core network receives a positioning request for a terminal (for example, certain services need to obtain the position information of the terminal), it can send the trigger information to the base station to trigger the base station to determine the configured grant resource.

Fig. 3 is a schematic flowchart of yet another method for resource configuration according to an embodiment of the present disclosure. As shown in Fig. 3, the network side device is a base station, and configuring the configured grant resource for the terminal includes followings.

In step S301, first configuration information is sent to the terminal, for example radio resource control (RRC) layer information. The first configuration information is configured to indicate the configured grant resource.

In one embodiment, in the case where the network side device is the base station, the base station can configure the configured grant resource for the terminal, such as sending the first configuration information to the terminal and indicating the configured grant resource through the first configuration information.

Fig. 4 is a schematic flowchart of yet another method for resource configuration according to an embodiment of the present disclosure. As shown in Fig. 4, determining the configured grant resource includes followings.

In step S401, first assistance information sent by the core network is received.

In step S402, the configured grant resource is determined according to the first assistance information.

In one embodiment, the base station can receive the first assistance information sent by the core network, such as the period of the positioning reference signal, the measurement object of the positioning reference signal (such as PRS-RSRP, PRS-RSTD), the number of transmission and reception points to be measured, and the period and size of the configured grant resource (such as the bandwidth occupied in the frequency domain and the number of symbols occupied in the time domain). The base station can then determine the configured grant information based on the first assistance information.

It should be noted that the first assistance information is used to assist the base station in determining the configured grant information. The base station can choose to determine the configured grant information based on the first assistance information or not based on the first assistance information, which can be determined according to the needs of the base station.

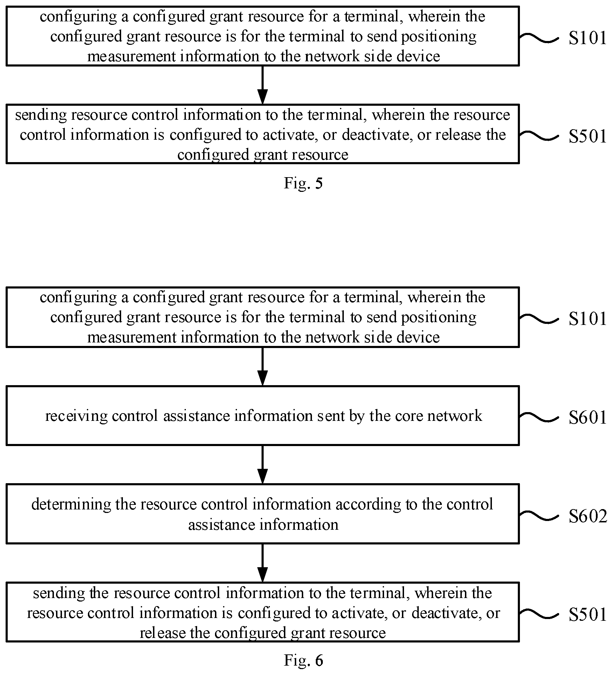

Fig. 5 is a schematic flowchart of yet another method for resource configuration according to an embodiment of the present disclosure. As shown in Fig. 5, the network side device is a base station, and the method further includes followings.

In step S501, resource control information is sent to the terminal, in which the resource control information is configured to activate, or deactivate, or release the configured grant resource.

In one embodiment, the base station can send the resource control information to the terminal, thereby activating, deactivating, or releasing the configured grant resource configured for the terminal.

For example, by activating the configured grant resource, the terminal can start using the configured grant resource. For example, by deactivating the configured grant resource, the terminal can stop using the configured grant resource. For example, by releasing the configured grant resource, the terminal can no longer use the configured grant resource and wait for the network side device to configure new configured grant resource.

Fig. 6 is a schematic flowchart of yet another method for resource configuration according to an embodiment of the present disclosure. As shown in Fig. 6, the method further includes followings.

In step S601, control assistance information sent by the core network is received.

In step S602, the resource control information is determined according to the control assistance information.

In one embodiment, the core network can send the control assistance information to the base station for determining the resource control information. For example, if the core network needs to position the terminal, it can send a positioning service start indication to the base station. Based on the positioning service start indication, the resource control information determined by the base station can be used to activate the configured grant resource. Fr example, if the core network completes the positioning of the terminal, it can send a positioning service end indication to the base station. Based on the positioning service end indication, the resource control information determined by the base station can be used to deactivate or release the configured grant resource.

It should be noted that the control assistance information is configured to assist the base station in determining the resource control information. The base station can choose to determine the resource control information based on the control assistance information or not based on the control assistance information, which can be determined according to the needs of the base station.

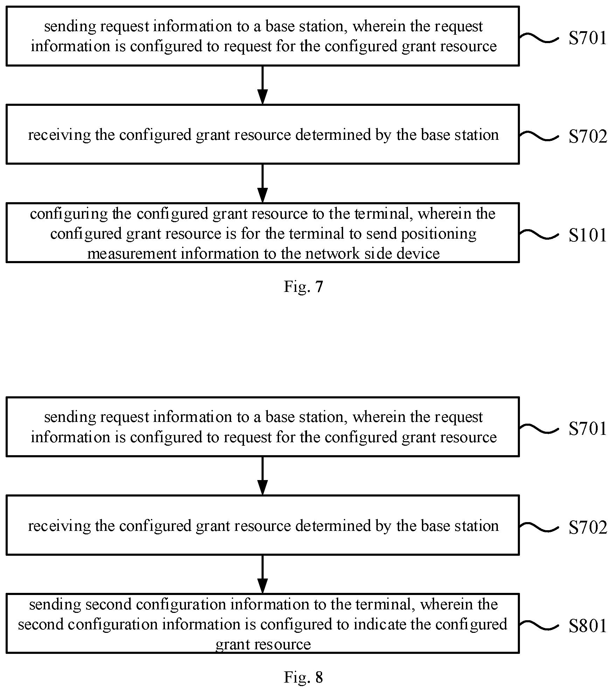

Fig. 7 is a schematic flowchart of yet another method for resource configuration according to an embodiment of the present disclosure. As shown in Fig. 7, the network side device is a core network, and the method further includes followings.

In step S701, request information is sent to the base station, in which the request information is configured to request for the configured grant resource.

In step S702, the configured grant resource determined by the base station is received.

In one embodiment, the core network can send the request information to the base station to request for the configured grant resource. After receiving the request information, the base station can determine the configured grant resource and send the configured grant resource to the core network.

Fig. 8 is a schematic flowchart of yet another method for resource configuration according to an embodiment of the present disclosure. As shown in Fig. 8, the network side device is a core network, and configuring the configured grant resource for the terminal includes followings.

In step S801, second configuration information is sent to the terminal, in which the second configuration information is configured to indicate the configured grant resource.

In one embodiment, in a case where the network side device is the core network, the configured grant resource can be configured by the core network to the terminal, such as sending the second configuration information to the terminal, and indicating the configured grant resource through the second configuration information.

In some embodiments, the second configuration information is carried in the positioning assistance information sent by the core network to the terminal, and/or in the position information request sent by the core network to the terminal.

The core network can send the positioning assistance information to the terminal, and the terminal can measure the positioning reference signal based on the positioning assistance information. The core network can send the position information request to the terminal, and the terminal can start measuring the positioning reference signal after receiving the position information request. By carrying the second configuration information in the positioning assistance information or position information request, the positioning assistance information or position information request can be reused, improving the utilization rate of communication resources.

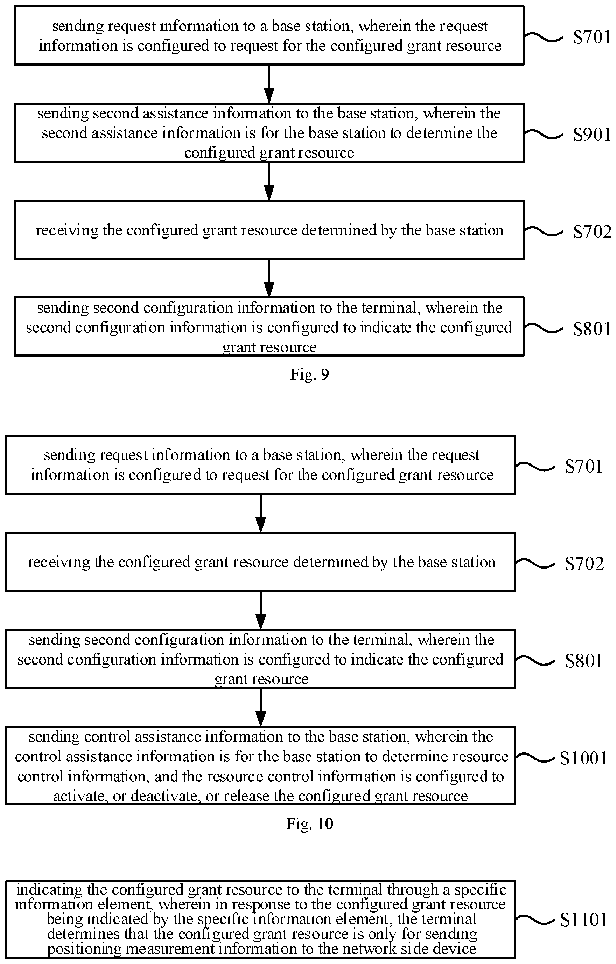

Fig. 9 is a schematic flowchart of yet another method for resource configuration according to an embodiment of the present disclosure. As shown in Fig. 9, configuring the configured grant resource for the terminal includes followings.

In step S901, second assistance information is sent to the base station, in which the second assistance information is for the base station to determine the configured grant resource.

In one embodiment, the core network can send the second assistance information to the base station, such as the period of the positioning reference signal, the measurement object of the positioning reference signal (such as PRS-RSRP, PRS-RSTD), the number of transmission and reception points to be measured, the period and size of the configured grant resource (such as the bandwidth occupied in the frequency domain, the number of symbols occupied in the time domain), etc. Then, the base station can determine the configured grant information based on the second assistance information.

It should be noted that the second assistance information is configured to assist the base station in determining the configured grant information. The base station can choose to determine the configured grant information based on the second assistance information or not based on the second assistance information, which can be determined according to the needs of the base station.

Fig. 10 is a schematic flowchart of yet another method for resource configuration according to an embodiment of the present disclosure. As shown in Fig. 10, the network side device is a core network, and the method further includes followings.

In step 1001, control assistance information is sent to the base station, in which the control assistance information is for the base station to determine resource control information, and the resource control information is configured to activate, or deactivate, or release the configured grant resource.

In one embodiment, the core network can send the control assistance information to the base station for determining the resource control information. For example, if the core network needs to position the terminal, it can send a positioning service start indication to the base station. Based on the positioning service start indication, the resource control information determined by the base station can be used to activate the configured grant resource. For example, if the core network completes the positioning of the terminal, it can send a positioning service end indication to the base station. Based on the positioning service end indication, the resource control information determined by the base station can be used to deactivate or release the configured grant resource.

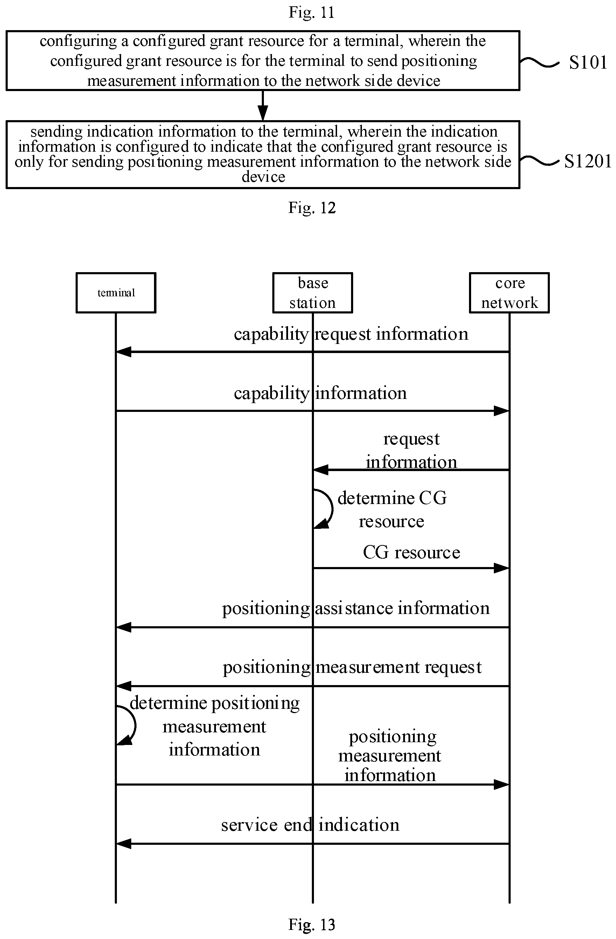

Fig. 11 is a schematic flowchart of yet another method for resource configuration according to an embodiment of the present disclosure. As shown in Fig. 11, configuring the configured grant resource for the terminal includes followings.

In step S1101, the configured grant resource is indicated to the terminal through a specific information element, wherein in response to the configured grant resource being indicated by the specific information element, the terminal determines that the configured grant resource is only for sending positioning measurement information to the network side device.

In one embodiment, the network side device can indicate to the terminal that, the configured grant resource configured for the terminal is dedicated for sending the positioning measurement information to the network side device.

A specific information element (IE) can be agreed with the terminal. The specific information element may be a newly added information element, for example, through protocol regulations, and then the configured grant resource can be indicated to the terminal in the specific information element. When the terminal receives the specific information element, it can consider by default that the indicated configured grant resource is dedicated for sending the positioning measurement information to network side device.

Fig. 12 is a schematic flowchart of yet another method for resource configuration according to an embodiment of the present disclosure. As shown in Fig. 12, the method further includes followings.

In step S1201, indication information is sent to the terminal, wherein the indication information is configured to indicate that the configured grant resource is only for sending positioning measurement information to the network side device.

In one embodiment, the network side device can indicate to the terminal that, the configured grant resource configured for the terminal is dedicated for sending the positioning measurement information to the network side device.

The configured grant resource can be indicated to the terminal through existing information elements, but additional indication information needs to be sent to the terminal to indicate the terminal that the configured grant resources configured to the terminal is dedicated for sending the positioning measurement information to network side device.

Fig. 13 is a schematic flowchart of yet another method for resource configuration according to an embodiment of the present disclosure.

As shown in Fig. 13, in one embodiment, the configured grant resource can be configured by the core network to the terminal.

In step S1301, the core network sends capability request information to the terminal.

In step S1302, the terminal sends capability information to the core network.

In step S1303, the core network sends request information to the base station, to request for obtaining configured grant information determined by the base station for the terminal. In addition, the core network may also send second assistance information to the base station.

In step S1304, the base station determines the configured grant resource, for example, according to the second assistance information.

In step S1305, the base station sends the determined configured grant resource to the core network.

In step S1306, the core network sends positioning assistance information to the terminal, in which second configuration information for indicating the configured grant resource can be carried in the positioning assistance information.

In Step S1307, the core network sends a position information request to the terminal, in which the second configuration information for indicating the configured grant resource can be carried in the positioning information request.

In step S1308, the terminal measures the positioning reference signal after receiving the position information request, to obtain positioning measurement information. For example, the terminal measures the positioning reference signal according to the positioning assistance information.

In step S1309, the terminal sends the positioning measurement information to the base station on the configured grant resource indicated by the second configuration information, so that the base station sends the positioning measurement information to the core network. If the positioning measurement information is the process information of positioning measurement, the core network needs to further calculate the result information of the positioning measurement based on the process information.

In step S1310, if the core network determines that the positioning measurement result meets requirements, the current positioning process can be ended and a positioning service end indication can be sent to the base station. The base station determines resource control information based on the positioning service end indication, in which the resource control information is used to deactivate or release the configured grant resource.

The content sent in steps 1303, 1305, and 1310 above can belong to NRPPAa (NR Location Protocol A) information. The execution sequence of steps 1303 to 1305 is not limited to the one shown in the drawing, and flexible adjustments can be made as needed, as long as after step 1302 and before step 1309.

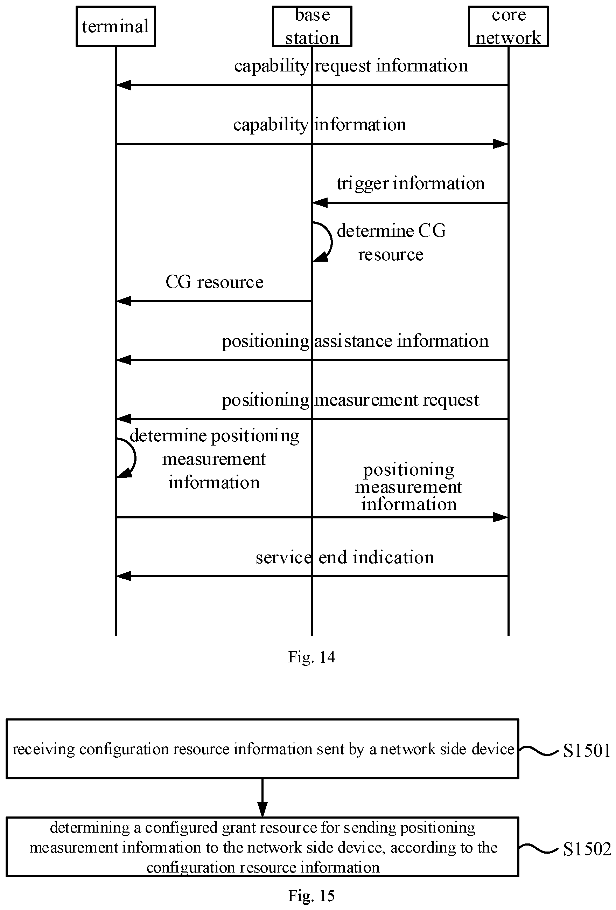

Fig. 14 is a schematic flowchart of yet another method for resource configuration according to an embodiment of the present disclosure.

As shown in Fig. 14, in one embodiment, the configured grant resource can be configured by the base station to the terminal.

In step S1401, the core network sends capability request information to the terminal.

In step S1402, the terminal sends capability information to the core network.

In step S1403, the core network sends trigger information to the base station, for triggering the base station to determine the configured grant information for the terminal. In addition, the core network may further send first assistance information to the base station.

In step S 1404, the base station determines the configured grant resource, for example based on the first assistance information.

In step S1405, the base station configures the configured grant resource to the terminal, for example through first configuration information.

In step S1406, the core network sends positioning assistance information to the terminal.

In step S1407, the core network sends a position information request to the terminal.

In step S1408, after receiving the position information request, the terminal measures the positioning reference signal to obtain positioning measurement information, such as measuring the positioning reference signal based on the positioning assistance information.

In step S1409, the terminal sends the positioning measurement information to the base station on the configured grant resource indicated by the first configuration information, so that the base station sends the positioning measurement information to the core network. If the positioning measurement information is the process information of positioning measurement, the core network needs to further calculate the result information of positioning measurement based on this process information.

In step S1410, if the core network determines that the positioning measurement result meets the requirements, the current positioning process can be ended and a positioning service end indication can be sent to the base station. The base station determines resource control information based on the positioning service end indication, in which the resource control information is used to deactivate or release the configured grant resource.

The content sent in steps 1403, 1405, and 1410 above can belong to NRPPa (NR Location Protocol A) information. The execution sequence of steps 1403 to 1405 is not limited to the one shown in the drawing, and flexible adjustments can be made as needed, as long as after step 1402 and before step 1409.

Fig. 15 is a schematic flowchart of a method for resource determination according to an embodiment of the present disclosure. The method for resource determination shown in this embodiment can be applied to a terminal, which includes but is not limited to an electronic device such as a mobile phone, a tablet, a wearable device, a sensor, an IoT device, etc. The terminal can communicate with the network side device, which can communicate with the terminal as a user equipment.

In one embodiment, the network side device may be a base station device, which includes but is not limited to a 4G base station, a 5G base station, and a 6G base station.

In one embodiment, the network side device may be a core network device, such as an LMF in the core network.

In one embodiment, the network side device may be a network side device to which the method for resource configuration described in any of the above embodiments is applicable.

As shown in Fig. 15, the method for resource determination may include following steps.

In step S1501, configuration resource information (for example, the first configuration information or the second configuration information in the foregoing embodiments) sent by a network side device is received.

In step S1502, a configured grant resource for sending positioning measurement information to the network side device is determined according to the configuration resource information.

In one embodiment, the network side device can configure the configured grant resource for the terminal. As the configured grant resource belong to resources that do not require dynamic grant, when the terminal needs to send positioning measurement information to the network side device, it can directly send the positioning measurement information to the network side device on the configured grant resource without waiting for the base station to configure uplink resources. This reduces the delay of the terminal sending the positioning measurement information to the core network, thereby reducing the delay of the positioning process, which is conducive to ensuring the accuracy of positioning, and also reduces the delay of the business (the business to which the measurement result needs to be applied) to obtain the measurement result.

In one embodiment, the positioning measurement information may be process information of the positioning measurement, such as the measurement result of the positioning reference signal (PRS) measured by the terminal, such as PRS-RSRP (reference signal receiving power) and PRS-RSTD (reference signal time difference). The terminal can send the process information of the positioning measurement to the network side device, and the result information of the positioning measurement is calculated by the network side device based on the process information of the positioning measurement.

In one embodiment, the positioning measurement information may be the result information of the positioning measurement. The terminal can determine the process information of the positioning measurement, calculate the result information of the positioning measurement based on the process information of the positioning measurement, and then send the result information of the positioning measurement to the network side device. For example, the positioning measurement information may be the position information of the terminal calculated by the terminal.

In one embodiment, for example, the terminal can measure the positioning reference signals sent by multiple transmission and reception points (TRPs). The process information of positioning measurement includes but is not limited to the signal strength information measured for the positioning reference signal sent by each TPR, and the time information of receiving the reference signal sent by each TRP.

In an embodiment, the network side device is a base station, and receiving the configuration resource information sent by the network side device includes: receiving radio resource control layer information sent by the base station, wherein the configuration resource information (such as the first configuration information in the above embodiment) is carried in the radio resource control layer information.

In one embodiment, after determining the configuration resource information, the base station can directly send the determined configuration resource information to the terminal, for example, by carrying the configuration resource information in the radio resource control (RRC) layer information.

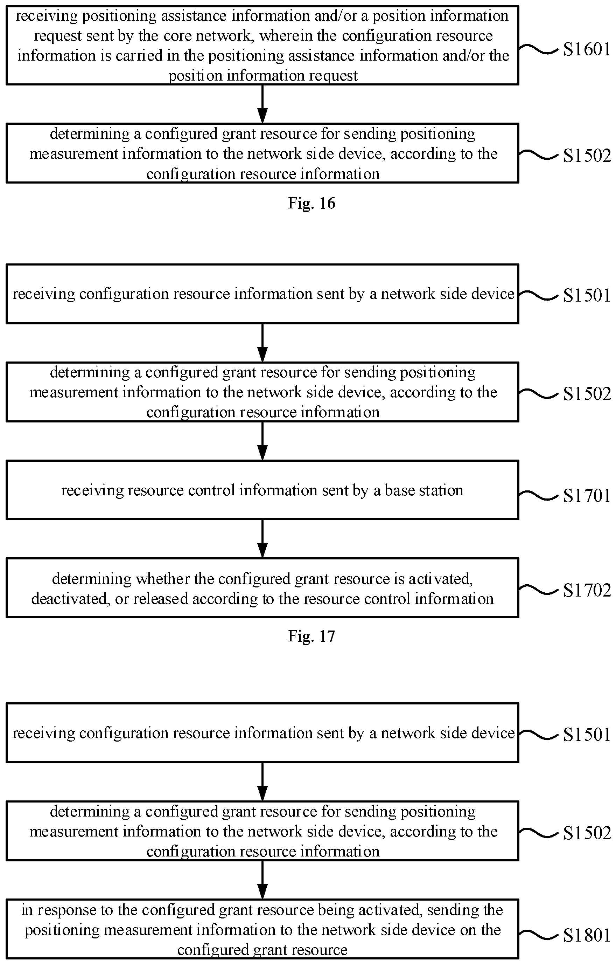

Fig. 16 is a schematic flowchart of another method for resource determination according to an embodiment of the present disclosure. As shown in Fig. 16, the network side device is a core network, and receiving the configuration resource information sent by the network side device includes followings.

In step S1601, positioning assistance information and/or a position information request sent by the core network is received, wherein the configuration resource information (such as the second configuration information in the foregoing embodiments) is carried in the positioning assistance information and/or the position information request.

In one embodiment, the core network can send the positioning assistance information to the terminal, and the terminal can measure the positioning reference signal based on the positioning assistance information. The core network can send the position information request to the terminal, and the terminal can start measuring the positioning reference signal after receiving the position information request. By carrying the configuration resource information into the positioning assistance information or the position information request, the positioning assistance information or the position information request can be reused, which improves the utilization of communication resources.

Fig. 17 is a schematic flowchart of yet another method for resource determination according to an embodiment of the present disclosure. As shown in Fig. 17, the method further includes followings.

In step S1701, resource control information sent by a base station is received.

In step S 1702, it is determined whether the configured grant resource is activated, deactivated or released according to the resource control information.

In one embodiment, the base station can send the resource control information to the terminal, thereby activating, deactivating, or releasing the configured grant resource configured for the terminal.

For example, by activating the configured grant resource, the terminal can start using the configured grant resource. For example, by deactivating the configured grant resource, the terminal can stop using the configured grant resource. For example, by releasing the configured grant resource, the terminal can no longer use the configured grant resource and wait for the network side device to configure new configured grant resource.

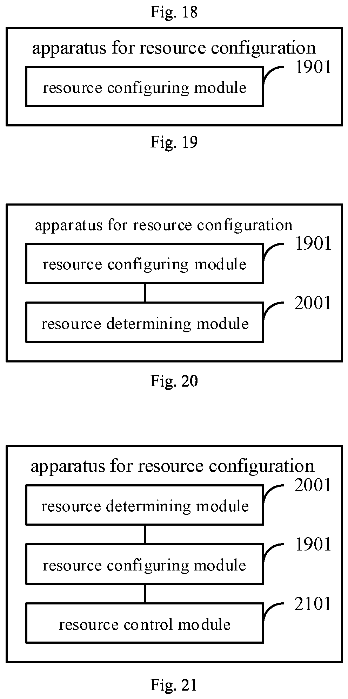

Fig. 18 is a schematic flowchart of yet another method for resource determination according to an embodiment of the present disclosure. As shown in Fig. 18, the method further includes followings.

In step S1801, in response to the configured grant resource being activated, the positioning measurement information is sent to the network side device on the configured grant resource.

In one embodiment, when the configured grant resource is activated, the terminal can start using the configured grant resource to send the positioning measurement information to the network side device on the configured grant resource.

Correspondingly to the aforementioned embodiments of the method for resource configuration and the method for resource determination, this disclosure also provides embodiments of an apparatus for resource configuration and an apparatus for resource determination.

Fig. 19 is a schematic block diagram of an apparatus for resource configuration according to an embodiment of the present disclosure. The apparatus for resource configuration shown in this embodiment may be applied to a network side device, which can communicate with a terminal as a user equipment. The terminal includes but not limited to an electronic device such as a mobile phone, a tablet, a wearable device, a sensor, and an IoT device.

In one embodiment, the network side device may be a base station device, which includes but is not limited to a 4G base station, a 5G base station, and a 6G base station.

In one embodiment, the network side device may be a core network device, for example, it may refer to an LMF (Location Management Function) in the core network.

In one embodiment, the terminal may be the terminal to which the apparatus for resource determination described in any subsequent embodiment is applicable.

As shown in Fig. 19, the apparatus for resource configuration may include a resource configuring module 1901.

The resource configuring module 1901 is configured to configure a configured grant resource for a terminal, in which the configured grant resource is for the terminal to send positioning measurement information to the network side device.

In one embodiment, the network side device may include at least one of:
a base station; or a core network.

Fig. 20 is a schematic block diagram of another apparatus for resource configuration according to an embodiment of the present disclosure. As shown in Fig. 20, the network side device is a base station, and the apparatus further includes a resource determining module 2001.

The resource determining module 2001 is configured to determine the configured grant resource in response to receiving trigger information sent by a core network.

In one embodiment, the network side device is the base station, and the resource configuring module is configured to send first configuration information to the terminal, in which the first configuration information is configured to indicate the configured grant resource.

In one embodiment, the resource determining module is configured to receive first assistance information sent by the core network, and determine the configured grant resource according to the first assistance information.

Fig. 21 is a schematic block diagram of yet another apparatus for resource configuration according to an embodiment of the present disclosure. As shown in Fig. 21, the network side device is a base station, and the apparatus further includes a resource control module 2101.

The resource control module 2101 is configured to second resource control information to the terminal, in which the resource control information is configured to activate, or deactivate, or release the configured grant resource.

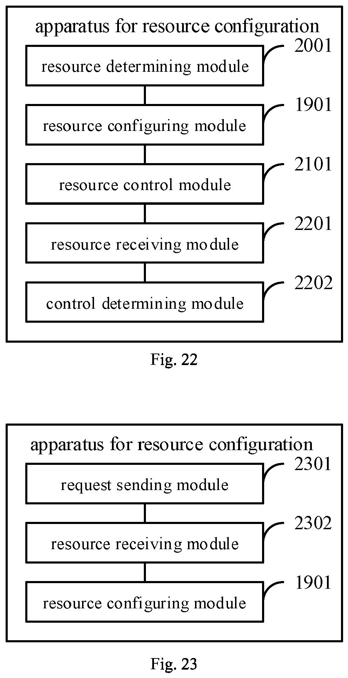

Fig. 22 is a schematic block diagram of yet another apparatus for resource configuration according to an embodiment of the present disclosure. As shown in Fig. 22, the apparatus further includes a control receiving module 2201 and a control determining module 2202.

The control receiving module 2201 is configured to receive control assistance information sent by the core network.

The control determining module 2202 is configured to determine the resource control information according to the control assistance information.

Fig. 23 is a schematic block diagram of yet another apparatus for resource configuration according to an embodiment of the present disclosure. As shown in Fig. 23, the network side device is a core network, and the apparatus further includes a request sending module 2301 and a resource receiving module 2302.

The request sending module 2301 is configured to send request information to the base station, in which the request information is configured to request for the configured grant resource.

The resource receiving module 2302 is configured to receive the configured grant resource determined by the base station.

In one embodiment, the network side device is the core network, and the resource configuring module is configured to send second configuration information to the terminal, in which the second configuration information is configured to indicate the configured grant resource.

In one embodiment, the second configuration information is carried in the positioning assistance information sent by the core network to the terminal, and/or in the position information request sent by the core network to the terminal.

In one embodiment, the resource configuring module is configured to send second assistance information to the base station, in which the second assistance information is for the base station to determine the configured grant resource.

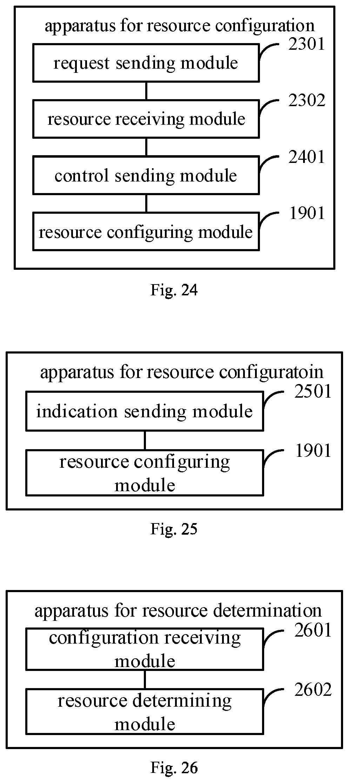

Fig. 24 is a schematic block diagram of yet another apparatus for resource configuration according to an embodiment of the present disclosure. As shown in Fig. 24, the network side device is a core network, and the apparatus further includes a control sending module 2401.

The control sending module 2401 is configured to send control assistance information to the base station, in which the control assistance information is for the base station to determine resource control information, and the resource control information is configured to activate, or deactivate, or release the configured grant resource.

In one embodiment, the resource configuring module is configured to indicate the configured grant resource to the terminal through a specific information element, wherein in response to the configured grant resource being indicated by the specific information element, the terminal determines that the configured grant resource is only for sending positioning measurement information to the network side device.

Fig. 25 is a schematic block diagram of yet another apparatus for resource configuration according to an embodiment of the present disclosure. As shown in Fig. 25, the apparatus further includes an indication sending module 2501.

The indication sending module 2501 is configured to send indication information to the terminal, wherein the indication information is configured to indicate that the configured grant resource is only for sending positioning measurement information to the network side device.

Fig. 26 is a schematic block diagram of an apparatus for resource determination according to an embodiment of the present disclosure. The apparatus for resource determination shown in this embodiment can be applied to a terminal, which includes but is not limited to an electronic device such as a mobile phone, a tablet, a wearable device, a sensor, an IoT device, etc. The terminal can communicate with the network side device, which can communicate with the terminal as a user equipment.

In one embodiment, the network side device may be a base station, which includes but is not limited to a 4G base station, a 5G base station, and a 6G base station.

In one embodiment, the network side device may be a core network, such as an LMF in the core network.

In one embodiment, the network side device may be a network side device to which the apparatus for resource configuration described in any of the above embodiments is applicable.

As shown in Fig. 26, the apparatus for resource determination may include a configuration receiving module 2601 and a resource determining module 2602.

The configuration receiving module 2601 is configured to receive configuration resource information sent by a network side device.

The resource determining module 2602 is configured to determine a configured grant resource for sending positioning measurement information to the network side device, according to the configuration resource information.

In one embodiment, the network side device includes at least one of:
a base station, or a core network.
in one embodiment, the network side device is a core network, and the configuration receiving module is configured to receive positioning assistance information and/or a position information request sent by the core network, wherein the configuration resource information is carried in the positioning assistance information and/or the position information request.

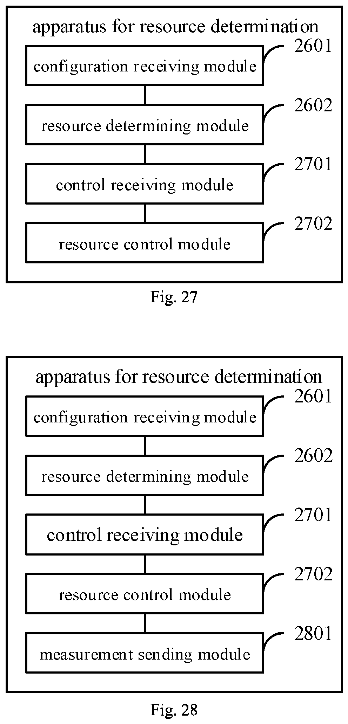

Fig. 27 is a schematic block diagram of another apparatus for resource determination according to an embodiment of the present disclosure. As shown in Fig. 27, the apparatus further includes a control receiving module 2701 and a resource control module 2702.

The control receiving module 2701 is configured to receive resource control information sent by a base station.

The resource control module 2702 is configured to determine whether the configured grant resource is activated, deactivated or released according to the resource control information.

Fig. 28 is a schematic block diagram of another apparatus for resource determination according to an embodiment of the present disclosure. As shown in Fig.28, the apparatus further includes a measurement sending module 2801.

The measurement sending module 2801 is configured to send the positioning measurement information to the network side device on the configured grant resource, in response to the configured grant resource being activated.

Regarding the apparatuses in the above embodiments, the specific ways in which each module performs operations have been described in detail in the relevant method embodiments, and will not be elaborated here.

For apparatus embodiments, since they basically correspond to method embodiments, please refer to the partial explanation of method embodiments for relevant information. The apparatus embodiments described above are only illustrative, where the modules described as separate components may be or may not be physically separated, and the components shown as modules may be or may not be physical modules, which can be located in one place or distributed across multiple network modules. Some or all modules can be selected according to actual needs to achieve the purpose of embodiments of the present disclosure. Ordinary skilled in the art can understand and implement without creative labor.

Embodiments of the present disclosure further provide an electronic device, including:
a processor; and
a memory configured to store instructions executable by the processor,
wherein the processor is configured to execute the method for resource configuration described in any of above embodiments.

Embodiments of the present disclosure further provide an electronic device, including:
a processor; and
a memory configured to store instructions executable by the processor,
wherein the processor is configured to execute the method for resource determination described in any of above embodiments.

Embodiments of the present disclosure further provide a computer readable storage medium, having stored thereon a computer program, which when executed by a processor, implements steps in the method for resource configuration described in any of above embodiments.

Embodiments of the present disclosure further provide a computer readable storage medium, having stored thereon a computer program, which when executed by a processor, implements steps in the method for resource determination described in any of above embodiments.

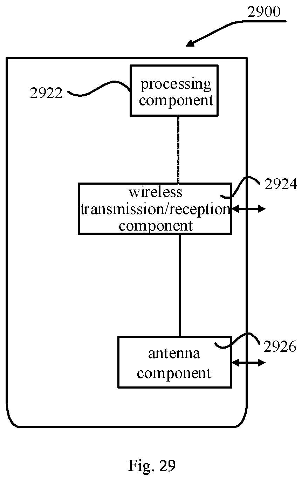

Fig. 29 is a schematic block diagram of a device 2900 for resource configuration according to an embodiment of the present disclosure. The device 2900 can be provided as a base station. Referring to Fig. 29, the device 2900 includes a processing component 2922, a wireless transmission/reception component 2924, an antenna component 2926, and a signal processing section unique to the wireless interface. The processing component 2922 may further include one or more processors. One of the processors in the processing component 2922 can be configured to implement the method for resource configuration described in any of the above embodiments.

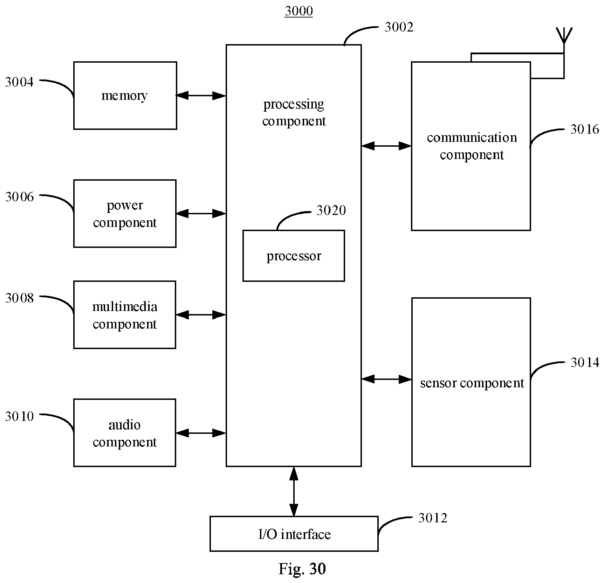

Fig. 30 is a schematic block diagram of a device 3000 for resource determination according to an embodiment of the present disclosure. For example, the device 3000 may be a mobile phone, a computer, a digital broadcasting terminal, a message transceiver device, a game console, a tablet device, a medical device, a fitness device, a personal digital assistants, etc.

Referring to Fig. 30, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 to execute instructions to perform all or part of the steps in the above-described HARQ-ACK feedback methods. Moreover, the processing component 3002 may include one or more modules which facilitate the interaction between the processing component 3002 and other components. For instance, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, video, etc. The memory 3004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 3008 includes a front camera and/or a rear camera. The front camera and the rear camera may receive an external multimedia datum while the device 3000 is in an operation mode, such as a photographing mode or a video mode. Each of the front camera and the rear camera may be a fixed optical lens system or have focus and optical zoom capability.

The audio component 3010 is configured to output and/or input audio signals. For example, the audio component 3010 includes a microphone ("MIC") configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a CMOS or CCD image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 can access a wireless network based on a communication standard, such as WiFi, second generation (2G), third gengeration (3G), fourth genetation (4G), fifth generation (5G) or sixth generation (6G), or a combination thereof. In one some embodiment, the communication component 3016 receives a broadcast signal or broadcast associated information from an external broadcast management system via a broadcast channel. In one some embodiment, the communication component 3016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the device 3000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 3004, executable by the processor 3020 in the device 3000, for performing the above-described HARQ-ACK feedback methods. For example, the non-transitory computer-readable storage medium may be a ROM, a RAM, a CD-ROM, a magnetic tape, a floppy disc, an optical data storage device, and the like.

Other embodiments of the disclosure will be apparent to those skilled in the art from consideration of the specification and practice of the disclosure disclosed herein. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

It should be noted that in this disclosure, relational terms such as first and second are only used to distinguish one entity or operation from another entity or operation, and do not necessarily require or imply any actual relationship or order between these entities or operations. The terms 'including', 'comprising', or any other variation thereof are intended to encompass non-exclusive inclusion, such that a process, method, item, or device that includes a series of elements not only includes those elements, but also other elements that are not explicitly listed, or also include elements inherent in such a process, method, item, or device. Without further limitations, the elements limited by the statement "including a..." do not exclude the existence of other identical elements in the process, method, item, or device that includes the said element.

The above provides a detailed introduction to the methods and apparatuses provided by embodiments of the present disclosure. Specific examples are applied in this disclosure to explain the principles and implementations of the present disclosure. The explanations of the above embodiments are only used to help understand the methods and core ideas of the present disclosure. Meanwhile, for those skilled in the art, there may be changes in specific implementation methods and application scope based on the ideas of this disclosure. In summary, the content of this specification should not be understood as a limitation of this disclosure.

## Claims

1. A method for resource configuration, applied to a network side device, the method comprising:
configuring a configured grant resource for a terminal, wherein the configured grant resource is for the terminal to send positioning measurement information to the network side device.

2. The method of claim 1, wherein the network side device comprises at least one of:
a base station device, or a core network device.

3. The method of claim 2, wherein the network side device is a base station, and the method further comprises:
determining the configured grant resource in response to receiving trigger information sent by a core network.

4. The method of claim 2, wherein the network side device is a base station, and configuring the configured grant resource for the terminal comprises:
sending first configuration information to the terminal, wherein the first configuration information is configured to indicate the configured grant resource.

5. The method of claim 3, wherein determining the configured grant resource comprises:
receiving first assistance information sent by the core network; and
determining the configured grant resource according to the first assistance information.

6. The method of claim 5, wherein the first assistance information comprises at least one of:
a period of a positioning reference signal, a measurement object of the positioning reference signal, a number of transmission and reception points to be measured, or a period and size of the configured grant resource.

7. The method of claim 2, wherein the network side device is a base station, and the method further comprises:
sending resource control information to the terminal, wherein the resource control information is configured to activate, or deactivate, or release the configured grant resource.

8. The method of claim 7, further comprising:
receiving control assistance information sent by the core network; and
determining the resource control information according to the control assistance information.

9. The method of claim 2, wherein the network side device is a core network, and the method further comprises:
sending request information to a base station, wherein the request information is configured to request for the configured grant resource; and
receiving the configured grant resource determined by the base station.

10. The method of claim 9, wherein the network side device is a core network, and configuring the configured grant resource for the terminal comprises:
sending second configuration information to the terminal, wherein the second configuration information is configured to indicate the configured grant resource.

11. The method of claim 10, wherein the second configuration information is carried in positioning assistance information sent from the core network to the terminal, and/or carried in a position information request sent from the core network to the terminal.

12. The method of claim 9, wherein configuring the configured grant resource for the terminal further comprises:
sending second assistance information to the base station, wherein the second assistance information is for the base station to determine the configured grant resource.

13. The method of claim 12, wherein the second assistance information comprises at least one of:
a period of a positioning reference signal, a measurement object of the positioning reference signal, a number of transmission and reception points to be measured, or a period and size of the configured grant resource.

14. The method of claim 2, wherein the network side device is a core network, and the method further comprises:
sending control assistance information to the base station, wherein the control assistance information is for the base station to determine resource control information, and the resource control information is configured to activate, or deactivate, or release the configured grant resource.

15. The method of any of claims 1-14, wherein configuring the configured grant resource for the terminal comprises:
indicating the configured grant resource to the terminal through a specific information element, wherein in response to the configured grant resource being indicated by the specific information element, the terminal determines that the configured grant resource is only for sending positioning measurement information to the network side device.

16. The method of any of claims 1-14, further comprising:
sending indication information to the terminal, wherein the indication information is configured to indicate that the configured grant resource is only for sending positioning measurement information to the network side device.

17. A method for resource determination, applied to a terminal, the method comprising:
receiving configuration resource information sent by a network side device; and
determining a configured grant resource for sending positioning measurement information to the network side device, according to the configuration resource information.

18. The method of claim 17, wherein the network side device comprises at least one of:
a base station device, or a core network device.

19. The method of claim 18, wherein the network side device is a base station, and receiving the configuration resource information sent by the network side device comprises:
receiving radio resource control layer information sent by the core network, wherein the configuration resource information is carried in the radio resource control layer information.

20. The method of claim 18, wherein the network side device is a core network, and receiving the configuration resource information sent by the network side device comprises:
receiving positioning assistance information and/or a position information request sent by the core network, wherein the configuration resource information is carried in the positioning assistance information and/or the position information request.

21. The method of any of claims 17-20, further comprising:
receiving resource control information sent by a base station; and
determining whether the configured grant resource is activated, deactivated, or released according to the resource control information.

22. The method of claim 21, further comprising:
in response to the configured grant resource being activated, sending the positioning measurement information to the network side device on the configured grant resource.

23. An apparatus for resource configuration, applied to a network side device, the apparatus comprising:
a resource configuring module, configured to configure a configured grant resource for a terminal, wherein the configured grant resource is for the terminal to send positioning measurement information to the network side device.

24. An apparatus for resource determination, applied to a terminal, the apparatus comprising:
a configuration receiving module, configured to receive configuration resource information sent by a network side device; and
a resource determining module, configured to determine a configured grant resource for sending positioning measurement information to the network side device, according to the configuration resource information.

25. An electronic device, comprising:
a processor; and
a memory configured to store instructions executable by the processor,
wherein the processor is configured to execute the method for resource configuration according to any of claims 1-16, and/or the method for resource determination according to any of claims 17-22.

26. A computer readable storage medium having a computer program stored thereon, wherein when the program is executed by a processor, the method for resource configuration according to any of claims 1-16, and/or the method for resource determination according to any of claims 17-22 is implemented.
